# EUROPEAN PATENT SPECIFICATION

(11) **EP 3 127 428 B1**
(45) Date of publication and mention of the grant of the patent: **25.08.2021**
(21) Application number: 15773780.0
(22) Date of filing: 27.03.2015
(51) Int. Cl.: A21D 2/26, A21D 2/18, A23L 29/10

(54) **USE OF BRANCHING ENZYME EC 2.4.1.18 TO IMPROVE COHESIVENESS IN BREAD**
VERWENDUNG DES VERZWEIGUNGSENZYMS EC 2.4.1.18 ZUR VERBESSERUNG DER KOHÄSION IN BROT
UTILISATION DE L'ENZYME DE RAMIFICATION EC 2.4.1.18 POUR AMÉLIORER LA COHÉSION DU PAIN

(30) Priority: 31.03.2014 JP 2014074299
(43) Date of publication of application: 08.02.2017
(73) Proprietor: Nagase ChemteX Corporation, Osaka-shi, Osaka 550-8668 (JP)
(72) Inventor: YAMAGUCHI, Hitomi, Fukuchiyama-shi Kyoto 620-0853 (JP)
(74) Representative: Schlich, George
(86) International application number: PCT/JP2015/059790
(87) International publication number: WO 2015/152099

(56) References cited:
- EP-A1- 0 492 406
- EP-A1- 0 687 414
- EP-A1- 1 736 061
- EP-A1- 2 671 456
- WO-A1-97/41735
- WO-A1-97/41736
- WO-A1-2004/084638
- WO-A1-2014/115894
- WO-A1-2014/157577
- JP-A- S57 132 850
- JP-A- 2000 513 568
- JP-A- 2002 186 406
- JP-A- 2012 527 230
- HARDEEP SINGH GUJRAL ET AL: "Effect of Cyclodextrinase on Dough Rheology and Bread Quality from Rice Flour", JOURNAL OF AGRICULTURAL AND FOOD CHEMISTRY, vol. 51, no. 13, 1 June 2003 (2003-06-01), pages 3814-3818, XP055050826, ISSN: 0021-8561, DOI: 10.1021/jf034112w
- Angelo Samir Melim Miguel ET AL: "Enzymes in Bakery: Current and Future Trends" In: "Food Industry", 16 January 2013 (2013-01-16), InTech, XP055393340, ISBN: 978-953-51-0911-2 DOI: 10.5772/53168, * the whole document *
- None

## Description

### Technical Field

The present invention relates to the use of branching enzyme EC 2.4.1.18 to improve cohesiveness in bread in which the cohesiveness is measured by compressing a 3-cm crumb by 21 mm twice using a rheometer with a 25 mm disc-type adapter, and taking the area ratio of waveforms representing the compression stress, area of second compression / area of first compression, as the cohesiveness.

### Background Art

A branching enzyme (EC 2.4.1.18, hereinafter, also referred to as "BE") is a transferase (6-α-glucanotransferase) that acts on starch. Also, this enzyme is a branching (branch-forming) enzyme that synthesizes α-1,6 linkages in polysaccharide composed of glucose, such as starch or glycogen.

Through the ages, BE has raised expectations for the application to food products, and is known in production of Cluster Dextrin and production of drinks and food products. It has been reported that, in particular, in production of drinks and food products, BE is effective not only for suppression of aging of starch and suppression of a decrease in the digestive efficiency, but also for suppression of deterioration in the quality by improving the physical properties such as smoothness, adhesiveness, thickness, formativeness, concentration, dispersibility, moisture retention, gloss, and the like of drinks and food products (Non-Patent Document 1 and Patent Document 1).

Furthermore, it has been reported that, in modification of bread or dough, a branching enzyme such as BE (e.g., *Geobacillus stearothennophilus-derived* BE) contributes to increasing of the bread volume and suppression of aging, when being used in combination with enzymes such as α-amylase or maltogenic amylase, and that the branching enzyme improves the quality of sensory stimulations (e.g., smell, smoothness, palatability, taste, and color of bread crust) in bread (Patent Document 2).

Bread to which highly branched cyclic dextrin (e.g., Cluster Dextrin) has been added has chewy texture (Patent Document 3). However, there is no report on reduction of the cohesiveness of bread.

Meanwhile, α-amylase, maltogenic amylase, glucan 1,4-α-maltotriohydrolase, glucan 1,4-α-maltotetraohydrolase, glucan 1,4-α-maltohexaosidase, phospholipase, galactolipase, emulsifier, oligosaccharide, sugar alcohol, and the like can be used to suppress aging of bread and to soften the bread. However, it is problematic in that the use of these materials in production of bread typically causes an increased cohesiveness, a poor meltability, a poor crispy texture, and a decreased swallowability for the bread. Although efforts have been made to produce soft bread so as to meet the preference of consumers, the addition of the above-described materials may cause an increased cohesiveness of bread, which is problematic. Thus, there is a demand for supply of bread that is soft and has a low cohesiveness.
WO 97/41736, in the name of Novo Nordisk AS, describes the use of a branching enzyme in the making of bread. Specifically, this document notes that doughs prepared according to the method set out therein have "excellent machinability". However, this is a property of dough, i.e. prior to baking, and not a property of bread once baked. The document does not describe how to improve cohesiveness in baked bread.

### Citation List

### Patent Documents

Patent Document 1: Japanese Patent Publication No. 58-022182
Patent Document 2: Japanese National Publication No. 2000-513568
Patent Document 3: Japanese Laid-Open Patent Publication No. 2011-87513

### Non-Patent Document

Non-Patent Document 1: Seibutu-kougaku Kaishi, 2006, Vol. 84, No. 2, pp. 61-66

### Summary of Invention

### Technical Problem

It is an object of the present invention to use branching enzyme EC 2.4.1.18 to improve the cohesiveness for bread.

### Solution to Problem

The present invention is directed to the use of a branching enzyme EC 2.4.1.18 to improve cohesiveness in bread, cohesiveness being measured by compressing a 3-cm crumb by 21 mm twice using a rheometer with a 25 mm disc-type adapter, and taking the area ratio of waveforms representing the compression stress, area of second compression / area of first compression, as the cohesiveness.

In one embodiment, the branching enzyme is derived from *Geobacillus stearothermophilus.*

In one embodiment, the use further includes at least one selected from the group consisting of α-amylase, maltogenic amylase, glucan 1,4-α-maltotriohydrolase, glucan 1,4-α-maltotetraohydrolase, glucan 1,4-α-maltohexaosidase, tetraohydrolase, phospholipase, galactolipase, emulsifier, oligosaccharide, and sugar alcohol.

Also described is a method for producing a bread or other grain flour puffed food product whose cohesiveness has been improved, including the step of
obtaining dough containing grain flour that is an ingredient of a bread or other grain flour puffed food product and branching enzyme EC 2.4.1.18.

In one embodiment, the dough further comprises at least one selected from the group consisting of α-amylase, maltogenic amylase, glucan 1,4-α-maltotriohydrolase, glucan 1,4-α-maltotetraohydrolase, glucan 1,4-α-maltohexaosidase, phospholipase, galactolipase, emulsifier, oligosaccharide, and sugar alcohol.

Also described is a method for improving cohesiveness of a bread or other grain flour puffed food product, including the step of
obtaining dough containing grain flour that is an ingredient of a bread or other grain flour puffed food product and branching enzyme EC 2.4.1.18.

Further described is the use of branching enzyme EC 2.4.1.18 as a stickiness-preventing agent in bread and other grain flour puffed food products.

Further described is the use of branching enzyme EC 2.4.1.18 as a meltability-improving agent in bread and other grain flour puffed food products.

Further described is the use of branching enzyme EC 2.4.1.18 as a swallowability-improving agent in bread and other grain flour puffed food products.

Further described is a caving-preventing agent in bread and other grain flour puffed food products.

The present disclosure describes a method for producing a bread or other grain flour puffed food product whose cohesiveness has been improved, including the step of
obtaining dough containing the cohesiveness-improving agent, the stickiness-preventing agent, the meltability-improving agent, the swallowability-improving agent or the caving-preventing agent, and grain flour that is an ingredient of a bread or other grain flour puffed food product; and
heating the dough.

### Advantageous Effects of Invention

The present invention is directed to the use of branching enzyme EC 2.4.1.18 to improve cohesiveness in bread.

Furthermore, branching enzyme, in combination with at least one selected from the group consisting of α-amylase, maltogenic amylase, glucan 1,4-α-maltotriohydrolase, glucan 1,4-α-maltotetraohydrolase, glucan 1,4-α-maltohexaosidase, phospholipase, galactolipase, emulsifier, oligosaccharide, and sugar alcohol, can improve cohesiveness of bread.

The present disclosure further describes a stickiness-preventing agent which can reduce stickiness in the oral cavity, a meltability-improving agent which can improve a loosed texture in the oral cavity, a swallowability-improving agent which can improve the level of ease in swallowing, and a caving-preventing agent which can suppress caving for the above-described food products.

### Brief Description of Drawings

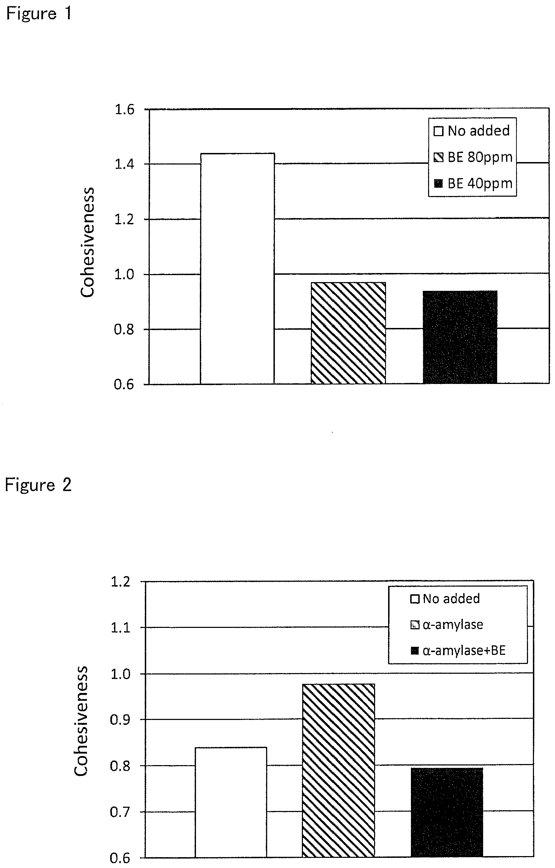

Fig. 1 is a graph showing the bread cohesiveness 1 day after baking, of white bread to which BE was added (Example 1:80 ppm and Example 2:40 ppm) and white bread to which no BE was added (Comparative Example 1).
Fig. 2 is a graph showing the cohesiveness 1 day after baking, of white bread to which α-amylase and BE were added (Example 3), white bread to which neither of α -amylase nor BE was added (Comparative Example 2), and white bread to which only α-amylase was added (Comparative Example 3).

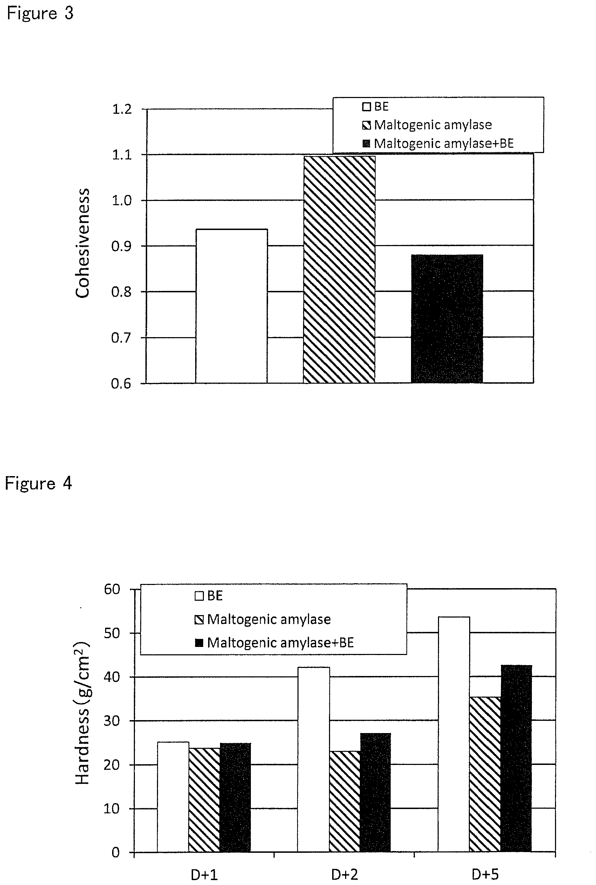

Fig. 3 is a graph showing the bread cohesiveness 1 day after baking, of white bread to which BE was added (Example 4), white bread to which only maltogenic amylase was added (Comparative Example 4), and white bread to which maltogenic amylase and BE were added (Example 5).
Fig. 4 is a graph showing the white bread hardness 1 day, 2 days, and 5 days after the baking, of the white bread to which BE was added (Example 4), the white bread to which only maltogenic amylase was added (Comparative Example 4), and the white bread to which maltogenic amylase and BE were added (Example 5).

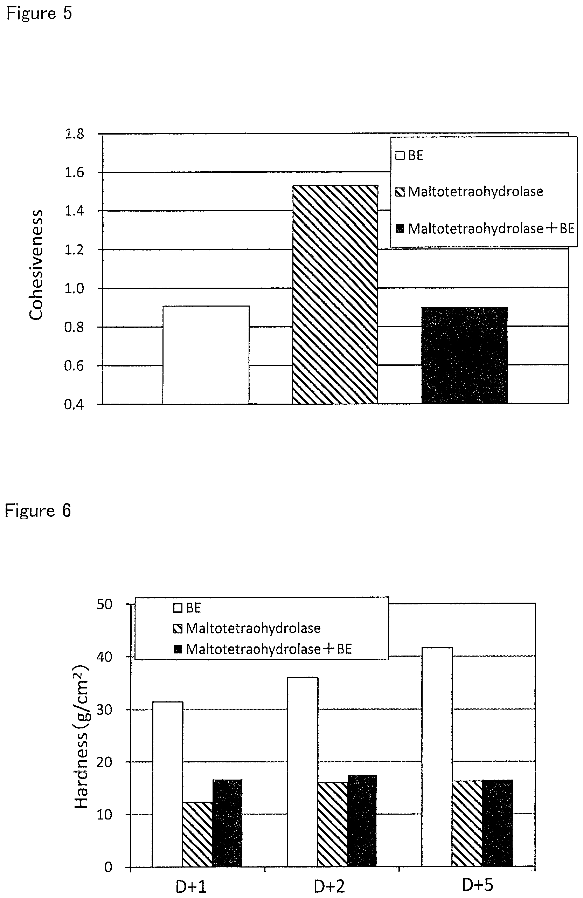

Fig. 5 is a graph showing the bread cohesiveness 1 day after baking, of white bread to which BE was added (Example 6), white bread to which only maltotetraohydrolase was added (Comparative Example 5), and white bread to which maltotetraohydrolase and BE were added (Example 7).
Fig. 6 is a graph showing the white bread hardness 1 day, 2 days, and 5 days after the baking, of the white bread to which BE was added (Example 6), the white bread to which only maltotetraohydrolase was added (Comparative Example 5), and the white bread to which maltotetraohydrolase and BE were added (Example 7).

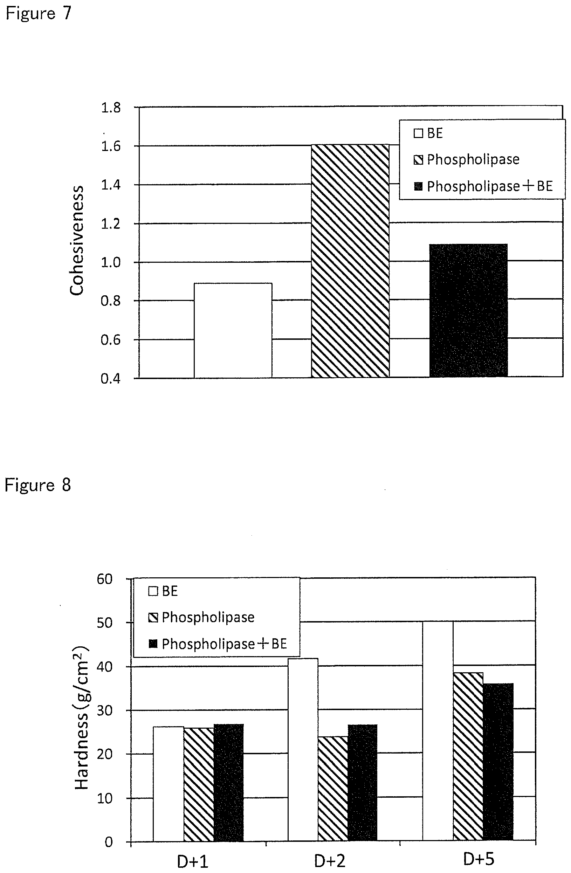

Fig. 7 is a graph showing the bread cohesiveness 1 day after baking, of white bread to which BE was added (Example 8), white bread to which only phospholipase was added (Comparative Example 6), and white bread to which phospholipase and BE were added (Example 9).
Fig. 8 is a graph showing the white bread hardness 1 day, 2 days, and 5 days after the baking, of the white bread to which BE was added (Example 8), the white bread to which only phospholipase was added (Comparative Example 6), and the white bread to which phospholipase and BE were added (Example 9).

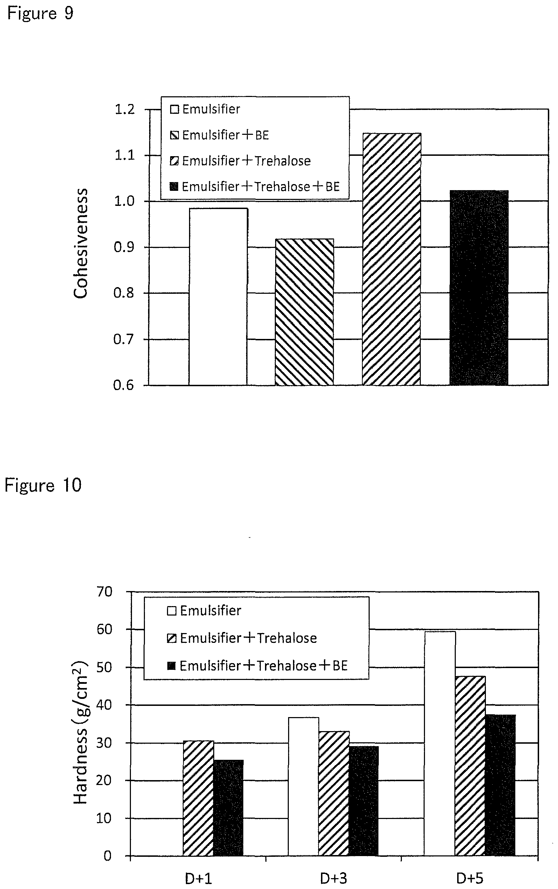

Fig. 9 is a graph showing the bread cohesiveness 1 day after baking, of white bread to which emulsifier was added (Comparative Example 7), white bread to which emulsifier and BE were added (Example 10), white bread to which emulsifier and trehalose were added (Comparative Example 8), and white bread to which emulsifier, trehalose, and BE were added (Example 11).
Fig. 10 is a graph showing the white bread hardness 1 day, 3 days, and 5 days after the baking, of the white bread to which emulsifier was added (Comparative Example 7), the white bread to which emulsifier and trehalose were added (Comparative Example 8), and the white bread to which emulsifier, trehalose, and BE were added (Example 11).

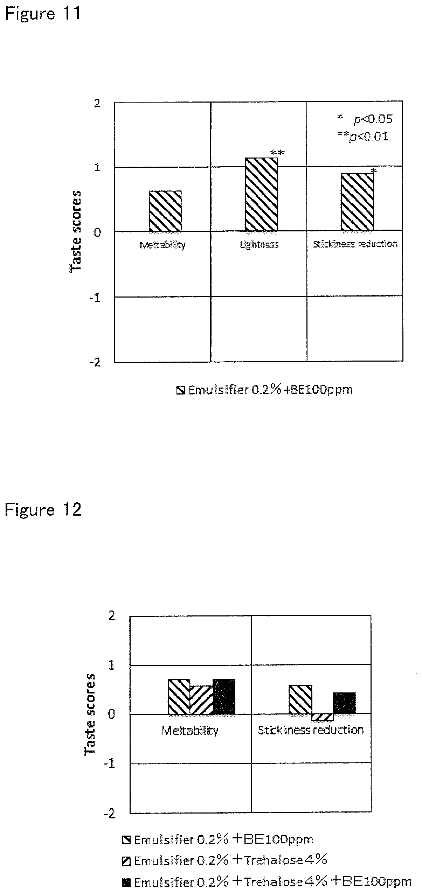

Fig. 11 is a graph showing taste scores regarding meltability, stickiness reduction, and lightness of the white bread to which emulsifier and BE were added (Example 10).
Fig. 12 is a graph showing a comparison between taste scores regarding meltability and stickiness reduction of the white bread to which emulsifier and BE were added (Example 10), the white bread to which emulsifier and trehalose were added (Comparative Example 8), and the white bread to which emulsifier, trehalose, and BE were added (Example 11).

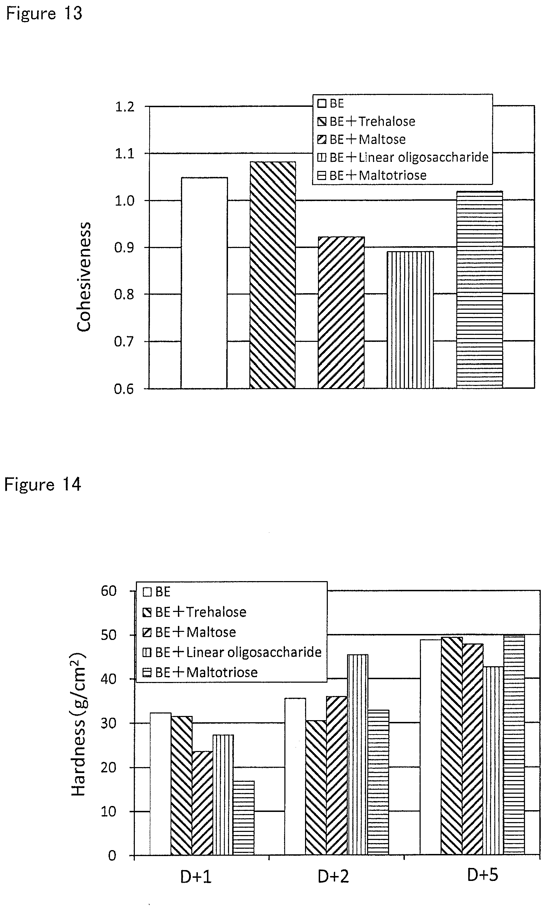

Fig. 13 is a graph showing the bread cohesiveness 1 day after baking, of the white bread to which BE was added (Example 10), white bread to which BE and trehalose were added (Example 12), white bread to which BE and maltose were added (Example 13), white bread to which BE and linear oligosaccharide were added (Example 14), and white bread to which BE and maltotriose were added (Example 15).
Fig. 14 is a graph showing the white bread hardness 1 day, 2 days, and 5 days after the baking, of the white bread to which BE was added (Example 10), the white bread to which BE and trehalose were added (Example 12), the white bread to which BE and maltose were added (Example 13), the white bread to which BE and linear oligosaccharide were added (Example 14), and the white bread to which BE and maltotriose were added (Example 15).

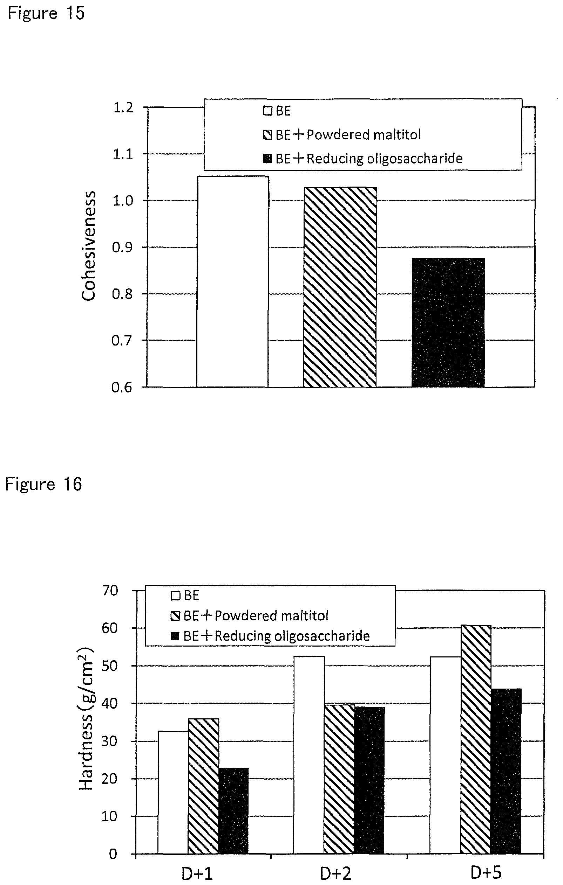

Fig. 15 is a graph showing the bread cohesiveness 1 day after baking, of the white bread to which BE was added (Example 10), white bread to which BE and powdered maltitol were added (Example 16), and white bread to which BE and reducing oligosaccharide were added (Example 17).
Fig. 16 is a graph showing the white bread hardness 1 day, 2 days, and 5 days after the baking, of the white bread to which BE was added (Example 10), the white bread to which BE and powdered maltitol were added (Example 16), and the white bread to which BE and reducing oligosaccharide were added (Example 17).

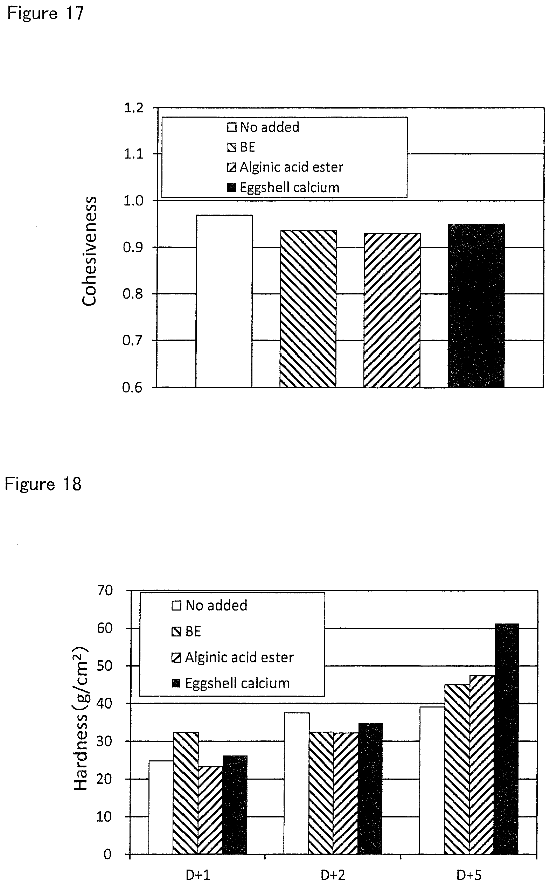

Fig. 17 is a graph showing the bread cohesiveness 1 day after baking, of the white bread to which BE was added (Example 10), white bread to which no BE was added (Comparative Example 9), white bread to which alginic acid ester was added (Comparative Example 10), and white bread to which eggshell calcium was added (Comparative Example 11).
Fig. 18 is a graph showing the white bread hardness 1 day, 2 days, and 5 days after the baking, of the white bread to which BE was added (Example 10), the white bread to which no BE was added (Comparative Example 9), the white bread to which alginic acid ester was added (Comparative Example 10), and the white bread to which eggshell calcium was added (Comparative Example 11).

### Description of Embodiments

The present invention id directed to the use of branching enzyme EC 2.4.1.18 to improve cohesiveness in bread.

Branching enzyme (EC 2.4.1.18) is a transferase (6-α-glucanotransferase) that acts on starch. Also, this enzyme is a branching (branch-forming) enzyme that synthesizes α-1,6 linkages in polysaccharide composed of glucose, such as starch or glycogen.

BE can produce cyclic structures in starch molecules of food products, thereby forming elastic backbone so as to increase the restoring force of the food products. Furthermore, BE can reduce the size of starch molecules. These actions of BE on starch may lead to improvement of cohesiveness, improvement of crispy texture and meltability, and the like of bread and other grain flour puffed food products.

BE has an optimum pH preferably in the range of 5 to 9, and more preferably in the range of 5 to 7. BE has an optimum activity preferably in the range of 20°C to 70°C, and more preferably in the range of 25°C to 50°C. BE may be active during preparation of dough of bread and other grain flour puffed food products, but may be inactive during heating (e.g., baking) in which the temperature becomes higher.

There is no limitation on the source and method for preparing BE. Examples of the methods for preparing BE include preparation methods using methods ordinarily used by those skilled in the art, such as extraction or purification from naturally-occurring organisms (e.g., plants or microorganisms) containing BE. Furthermore, BE may be prepared using recombinant DNA techniques well known in the art. Examples of the organisms containing BE include *Arthrobacter globiformis, Bacillus megaterium, Streptococcus mitis, Salmonella typhimurium,* algae *Cyamdium caldarium, Escherichia coli, Bacillus caldolyticus, Geobacillus stearothermophilus, Synechococcus* spp., and the like. Of these, *Geobacillus stearothermophilus-derived* BE is preferable.

A method for preparing BE from naturally-occurring organisms includes, for example, the steps of culturing a BE-producing microorganism, separating microorganism cells from the culture solution, and extracting BE from the microorganism cells and purifying the BE. In the culturing a BE-producing microorganism, the microorganism is cultured in a culture medium containing a nutrient source that can be used by the microorganism. A form of the culture medium may be in a liquid state or in a solid state as long as the production of BE is promoted. A liquid culture medium is preferable for mass culture, because the culture medium can be easily prepared, and can be stirred to realize culturing to a high cell concentration. Examples of the nutrient source include a carbon source, a nitrogen source, and inorganic salts. Examples of the carbon source include glucose, glycerin, dextrin, starch, molasses, and oil from animals and plants. Examples of the nitrogen source include soybean flour, corn steep liquor, cottonseed cakes, meat extract, peptone, yeast extract, ammonium sulfate, sodium nitrate, and urea. Examples of the inorganic salts include sodium, potassium, calcium, magnesium, manganese, iron, cobalt, zinc, and phosphate. A culturing method may be stationary culture, shaking culture, or aerated and agitated culture. Aerated and agitated culture is preferable for mass culture, because air and the nutrient source can be effectively supplied to cells. A culture temperature is, for example, 25°C to 70°C, and preferably 30°C to 60°C. pH of the culture medium is preferably pH 5 to pH 8. A culture time is, for example, 1 to 7 days and the culturing is stopped when the amount of BE accumulated in the cells reaches its maximum under monitoring by methods ordinarily used by those skilled in the art. In the separating BE-containing microorganism cells from the culture solution, for example, methods such as centrifugal separation, filtering, and distillation under reduced pressure can be used. Examples of the method for extracting BE from the microorganism cells include physical methods such as freezing and thawing, high-pressure homogenization treatment, and bead treatment, treatment using an agent to damage cell membranes, methods of abruptly changing osmotic pressure, and chemical methods such as alkali treatment and enzyme treatment. In the separating BE from the BE-containing solution and purifying the BE, for example, known methods such as ultrafiltration using a filtration membrane with molecular weight cut off of 5000 or 10000, fractionation using ammonium sulfate or ethanol, and purification by chromatography can be used in combination as appropriate depending on a desired purity of BE. As BE, the solution containing BE may be used in a liquid state as it is, or a powdered enzyme obtained by vacuum-drying or lyophilization may be used.

As BE, enzymes contained in a commercially available preparation may also be used. There is no particular limitation on the commercially available preparation, and examples thereof include Denazyme BBR LIGHT (50,000 U/g) (manufactured by Nagase ChemteX Corporation).

In the present disclosure the BE activity can be calculated by adding an enzyme solution to aqueous amylose solution (0.1% amylose (derived from potato, Sigma-Aldrich)), causing reaction at 50°C for 10 minutes and then color reaction with iodine, and taking, as one unit (U), the amount of enzyme at which the rate of decrease in absorbance (660 nm) per minute is 1%.

There is no limitation on the BE content. BE is contained in a proportion of preferably 1000 U to 1000000 U, and more preferably 5000 U to 100000 U, when the total weight of this agent is taken as 1 g. The cohesiveness-improving agent for bread and other grain flour puffed food products of the present invention may be constituted only by BE. In the present invention, BE is contained in such a range, so that the cohesiveness improving effect, which has been described above and will be described below, can be further improved.

"Cohesiveness" encompasses both of physical properties evaluated by texture measurement of food products (e.g., measurement according to "Evaluation Method 2" below) and cohesion of food products in the oral cavity when they are being eaten. For example, cohesion of bread and other grain flour puffed food products may affect a restoring force of the bread and other grain flour puffed food products after heating (e.g., bread after baking) and stickiness of the bread and other grain flour puffed food products in the oral cavity.

Improvement of "cohesiveness" refer to improvement of physical properties of food products (reduction of cohesiveness or improvement of restoring force), and/or improvement or suppression of undesirable actions caused by cohesion. Examples of the improvement or suppression of undesirable actions include reduction of stickiness, improvement of masticability and swallowability, prevention or suppression of caving (cave-in), and the like.

The cohesiveness-improving agent can improve not only cohesiveness but also other qualities, for example, it can improve crispy texture, improve meltability, improve swallowability, reduce stickiness, and prevent or suppress caving. "Crispy texture" encompasses the level of ease in biting off a food product when it is introduced into the oral cavity and it is in the oral cavity (i.e., the level of ease in biting off a food product in the first bite and following bites). "Meltability" is an index indicating loosed texture in the oral cavity, and is a sensory evaluation index that is different from comfort felt in the entire oral cavity indicated by "smoothness". "Swallowability" is an index indicating the level of ease in swallowing a food product and can be obtained as a result of improvement of cohesiveness and improvement of meltability. "Stickiness (kuchatsuki)" refers to properties sensorially expressing a poor meltability of, and cohesiveness of a food product on eaten, and discomfort associated therewith. "Caving" is depression in bread and other grain flour puffed food products after heating (e.g., bread after baking), and is also referred to as cave-in. The cohesiveness-improving agent can improve not only cohesiveness but also the above-described qualities, thereby providing an excellent texture. The cohesiveness-improving agent may provide light texture (lightness) to food products.

In another aspect, it is disclosed a stickiness-preventing agent, a meltability-improving agent, a swallowability-improving agent, and a caving-preventing agent, which contain the cohesiveness-improving agent. Furthermore, the cohesiveness-improving agent of the present invention may be used as: an additive for preventing stickiness, that is, a stickiness-preventing agent; an additive for improving meltability, that is, a meltability-improving agent; an additive for improving the level of ease in swallowing, that is, a swallowability-improving agent; and an additive for preventing caving, that is, a caving-preventing agent.

There is no particular limitation on the form of the cohesiveness-improving agent and examples thereof include a powder state, and a liquid state in which the agent is dissolved in a liquid such as water. In the case of a powder state, a powder state may be obtained by dissolving BE in solvent such as water or sugar solution, blending vehicle such as dextrin as necessary, and then drying the solution.

The cohesiveness-improving agent may contain other components (e.g., vehicle, pH adjusting agent, preservative, etc.) that may be ordinarily contained in an enzyme preparation within the range where the effects of the present disclosure are not inhibited. Examples of such other components include enzymes (e.g., α-amylase, β-amylase, maltogenic amylase, glucan 1,4-α-maltotriohydrolase, glucan 1,4-α-maltotetraohydrolase, glucan 1,4-α-maltohexaosidase, hemicellulase, phospholipase, galactolipase, glucose oxidase, ascorbate oxidase, peroxidase, catalase, glutathione dehydrogenase, protease, peptidase, transglutaminase, cyclodextrin glucanotransferase, β-glucanase, triacylglycerol lipase, etc.), polysaccharide thickeners (e.g., modified starch, gums, alginic acid, alginic acid derivatives, pectin, carrageenan, curdlan, pullulan, gelatin, cellulose derivatives, agar, tamarind, psyllium, glucomannan, etc.), emulsifiers (e.g., glycerin fatty acid ester, polyglycerin fatty acid ester, sucrose fatty acid ester, propylene glycol fatty acid ester, sorbitan fatty acid ester, lecithin, enzyme degraded lecithin, saponin, etc.), dairy products (e.g., milk, powdered skim milk, whole milk powder, whey powder, casein, cheese, yoghurt, condensed milk, fermented milk, cream, etc.), extracts (e.g., yeast extract, malt extract, etc.), carbohydrates (e.g.: monosaccharide such as dextrose and fructose; disaccharide such as sugar, maltose, isomaltose, trehalose, lactose, lactulose, and cellobiose; linear or branched oligosaccharide such as maltotriose or higher maltooligosaccharides, raffinose, panose, stachyose, glucooligosaccharide, maltooligosaccharide, isomaltooligosaccharide, fructooligosaccharide, xylooligosaccharide, soybean oligosaccharide, gentiooligosaccharide, nigerooligosaccharide, galactooligosaccharide, mannan oligosaccharide, and lactosucrose; sugar mixture such as isomerized syrup, starch syrup, powder candy, and honey; polysaccharide such as starch and dextrin; and sugar alcohol such as reduced starch syrup, maltitol, lactitol, sorbitol, mannitol, xylitol, Palatinit, erythritol, and oligosaccharide reduced products), fermentation liquor, pre-ferment, eggs, sweetener, and inorganic salts (table salt (sodium chloride), ammonium sulfate, sodium sulfate, etc.). There is no particular limitation on the pH adjusting agent, and examples thereof include: acetic acid, dehydroacetic acid, lactic acid, citric acid, gluconic acid, succinic acid, tartaric acid, fumaric acid, malic acid, and adipic acid, and sodium (Na) salts, calcium (Ca) salts, and potassium (K) salts of these organic acids; and carbonic acid, phosphoric acid, and pyrophosphoric acid, and Na salts and K salts of these inorganic acids. There is no particular limitation on the preservative, and examples thereof include propionic acid, sodium propionate, calcium propionate, and fermented propionic acid. There is no particular limitation on the content of other components contained in the cohesiveness-improving agent of the present disclosure and any amount may be selected by those skilled in the art.

Of these, for example, α-amylase, maltogenic amylase, glucan 1,4-α-maltotriohydrolase, glucan 1,4-α-maltotetraohydrolase, glucan 1,4-α-maltohexaosidase, phospholipase, galactolipase, emulsifier, ohgosaccharide, sugar alcohol, and the like may be used to suppress aging of bread and other grain flour puffed food products and to soften the food products (in this specification, these components may be collectively referred to as an "aging-suppressing agent"). These aging-suppressing agents may be used alone or in any combination of two or more. In one embodiment, an emulsifier and other one or more aging-suppressing agents (in particular, at least any one of oligosaccharide and sugar alcohol) may be used in combination.

The cohesiveness-improving agent of the present disclosure may contain the aging-suppressing agent together with BE. This aspect encompasses both of an embodiment in which the aging-suppressing agent is blended together with BE as the cohesiveness-improving agent of the present disclosure and an embodiment in which the aging-suppressing agent is prepared separately from BE and used in combination with the BE in production of bread and other grain flour puffed food products. The aging-suppressing agent may be blended in the cohesiveness-improving agent of the present disclosure as a component that may be ordinarily contained in an ordinary quality-improving agent for bread and other grain flour puffed food products or in an enzyme preparation. The amounts of BE and aging-suppressing agent contained in the cohesiveness-improving agent or the ratio of BE and aging-suppressing agent used may be determined as appropriate by those skilled in the art.

BE can improve cohesiveness in the coexistence of the aging-suppressing agent, without impairing the qualities or properties that are imparted by the aging-suppressing components and the like to bread and other grain flour puffed food products. In the case of using BE and the aging-suppressing agent in combination, for example, it is possible to soften bread and other grain flour puffed food products, maintain palatability, and reduce cohesiveness, thereby providing good crispy texture, good meltability, and good swallowability, and providing excellent texture.

The cohesiveness-improving agent of the present disclosure can be used in production of bread and other grain flour puffed food products. For example, bread and other grain flour puffed food products may be produced by preparing dough containing grain flour, which is an ingredient of the bread and other grain flour puffed food products, and the cohesiveness-improving agent and heating the dough.

The cohesiveness-improving agent of the present disclosure can be added before, during, or after combining, kneading, mixing, and the like of ingredients including grain flour (the ingredients including grain flour may be collectively referred to simply as "production ingredients") to produce a dough. When BE and the aging-suppressing agent are used in combination in production of bread and other grain flour puffed food products, they may be added together as the cohesiveness-improving agent, or the BE and the aging-suppressing agent may be separately added.

In this specification, "heating" encompasses baking, steaming, boiling, and frying. The heating conditions may be set as appropriate depending on the type of heating apparatus, the blend of food products to be heated, moisture, the quality, and the like.

Bread and other grain flour puffed food products and dough thereof may be produced so as to contain the cohesiveness-improving agent. The food products and dough contain BE contained in the cohesiveness-improving agent of the present invention, in a proportion of preferably 10 U to 50000 U, and more preferably 100 U to 10000 U, with respect to 100 g of grain flour (e.g., wheat flour) in the production ingredients. In the present disclosure the food products and dough contain BE in such a range, so that the cohesiveness improving effect, which has been described above and will be described below, can be further improved.

In one embodiment BE may be blended in an amount of, for example, 0.0075 to 0.03 mg (enzyme weight) per kg of grain flour. This amount may be an extremely small amount compared with, for example, the amount of BE blended (an enzyme weight of 0.01 to 1000 mg, preferably 0.1 to 100 mg, and more preferably 0.1 to 10 mg, per kg of grain flour) as described in Patent Document 2. the effect of improving the cohesiveness of bread and other grain flour puffed food products can be achieved with such a small amount of BE blended.

When BE and the aging-suppressing agent are used in combination, they may be added together as the cohesiveness-improving agent, or the BE and the aging-suppressing agent may be separately added. The aging-suppressing agent may be used in an amount ordinarily set in production of bread and other grain flour puffed food products. The amount of aging-suppressing agent added (proportion with respect to the grain flour weight) is, for example, such that, in the case of the enzyme (α-amylase, maltogenic amylase, glucan 1,4-α-maltotriohydrolase, glucan 1,4-α-maltotetraohydrolase, glucan 1,4-α-maltohexaosidase, phospholipase, galactolipase, etc.), the amount is 1 ppm to 5% and preferably 10 ppm to 2%, in the case of the emulsifier, the amount is 0.01% to 5% and preferably 0.1% to 2%, and, in the case of the oligosaccharide or sugar alcohol, the amount is 0.5 to 20% and preferably 1 to 10%.

In preparation of dough, in addition to the cohesiveness-improving agent, or BE and the aging-suppressing agent, other components for improving the qualities or properties of bread and other grain flour puffed food products may be further blended. Such other components are as described above. In preparation of dough, such other components may be blended separately from the cohesiveness-improving agent, or may be blended together with the cohesiveness-improving agent containing components that are the same as or different from the other components.

Hereinafter, breadmaking will be described as an example.

The breadmaking ingredients refer to ordinary ingredients used in production of bread, and examples thereof include grain flour, yeast (e.g., fresh yeast, dry yeast, instant dry yeast, etc.), sugar content (e.g., sugar such as very-refined sugar, granulated sugar, yellow soft sugar, and raw sugar, isomerized syrup, powdered starch syrup, starch syrup, sugar alcohol, oligosaccharide, trehalose, etc.), table salt, milk constituent (e.g., milk, cream, whole milk powder, powdered skim milk, milk protein, concentrated milk, etc.), fats and oils (e.g., shortening, margarine, butter, etc.), water, and the like.

Furthermore, the breadmaking ingredients may further include, as necessary, vegetable protein (e.g., soybean protein, wheat gluten, etc.), baking powder (e.g., ammonium bicarbonate, sodium bicarbonate, etc.), emulsifier (e.g., Quillaja saponin, lecithin, etc.), thickening stabilizer (xanthan gum, guar gum, carrageenan, alginic acid, etc.), pH adjusting agent (acetic acid, acetate, etc.), inorganic salts, cacao and cacao products, coffee and coffee products, teas (e.g., black tea, powdered tea, etc.), flavoring agent, taste components such as seasoning, coloring matter, preservative, antioxidant, vitamin C, preservative (propionic acid, propionate, fermented propionic acid, etc.), sweetener (e.g., stevia, aspartame, glycyrrhizin, acesulfame potassium, sucralose, neotame, etc.), and the like, as long as the effects of the present invention are not inhibited.

Bread can be produced by any breadmaking method known in the art, such as straight method, sponge and dough method, and no-time dough method, as long as bread dough containing the breadmaking ingredients and the cohesiveness-improving agent of the present disclosure can be obtained and heated.

There is no limitation on the method for making the cohesiveness-improving agent to be contained in bread dough or bread. The cohesiveness-improving agent may be added or blended at any point in time before, during, or after the mixing in breadmaking. The breadmaking ingredients and the cohesiveness-improving agent are preferably mixed. In this case, the cohesiveness-improving agent may be added either before or during the mixing. The cohesiveness-improving agent may be directly added to any breadmaking ingredient, or the cohesiveness-improving agent in a state of being dissolved in advance in a liquid such as water may be added to the breadmaking ingredients. Furthermore, the cohesiveness-improving agent may be added to and combined with the whole of the breadmaking ingredients, or may be added to and combined with part (e.g., grain flour) of the breadmaking ingredients, after which the other breadmaking ingredients may be added to and combined with the mixture. For example, if the cohesiveness-improving agent is in a powder state, it may be combined by powder mixing with powder ingredients (preferably, they are combined and sieved). The cohesiveness-improving agent may be dissolved (in the case of a powder state) in or diluted (in the case of a liquid state) with water as necessary together with table salt or sugar. The cohesiveness-improving agent may be used, as necessary, after being blended in or dispersed or dissolved in fats and oils such as margarine in advance.

In this specification, "mixing" refers to combining and kneading the breadmaking ingredients and the cohesiveness-improving agent of the present invention. The mixing may be performed under conditions ordinarily set in breadmaking.

Heating may be performed under conditions ordinarily set in breadmaking. The conditions may be selected as appropriate according to the size, type, or the like of bread. For example, the conditions may be such that bread dough is kept at 100°C to 250°C for 2 to 60 minutes.

In this specification, "fermentation" refers to allowing yeast in the breadmaking ingredients to produce carbon dioxide gas and metabolic products, as a result of which the bread dough swells up and has a better flavor. In breadmaking, fermentation may occur without following the conditions below, but bread dough obtained after mixing may be subjected to fermentation treatment. In this specification, the fermentation treatment refers to positively putting dough in conditions where fermentation progresses. The fermentation treatment conditions may be those used in ordinary breadmaking methods, and may be selected as appropriate according to the type of bread. The fermentation temperature is, for example, 0°C to 45°C, and preferably 25°C to 45°C, and the fermentation time is, for example, 0 to 20 hours, preferably 0 to 6 hours, and more preferably 1 to 5 hours.

For example, if a straight method is used as the breadmaking method, bread may be produced, for example, as follows. The cohesiveness-improving agent of the present disclosure is added and mix with the breadmaking ingredients, so that bread dough is obtained. The obtained dough is fermented, for example, at 25°C to 40°C for 30 to 120 minutes (primary fermentation). Then, as necessary, the bread dough is divided as appropriate according to a desired shape of bread, and the dough is shaped and is further fermented, for example, at 25°C to 45°C until the dough swells up to have an appropriate size (e.g., for 30 to 150 minutes). After the fermentation, the dough is heated (e.g., baked) at 160°C to 250°C for 10 to 60 minutes, so that bread can be produced.

For example, if a sponge and dough method is used as the breadmaking method, the cohesiveness-improving agent may be blended in at least one of the sponge dough ingredients mainly constituted by grain flour and yeast and the mixing ingredients mainly constituted by grain flour, sugar, and shortening.

For example, in the sponge and dough method, bread may be produced as follows. The sponge dough ingredients are mixed and fermented, for example, at 25°C to 35°C for 2 to 5 hours (sponge fermentation). The obtained material is mixed with the dough mixing ingredients, and the obtained bread dough is allowed to rest typically at 15°C to 35°C for 10 to 40 minutes (floor time). Then, the dough is divided as appropriate according to a desired shape of bread, and is allowed to rest, for example, at 15°C to 35°C for 10 to 30 minutes (bench time). The dough is shaped and is subjected to final fermentation, for example, at 25°C to 45°C until the dough is puffed to have an appropriate size, after which the dough is baked at 160°C to 250°C for 10 to 60 minutes, so that bread can be produced.

Bread may be produced via freezing. In this specification, "freezing" refers to freezing part or the whole of the bread dough.

The freezing may be performed at any point in time after the bread dough is obtained and before heating (e.g., baking) treatment is performed. For example, the freezing may be performed immediately after mixing, may be performed after the bread dough obtained by mixing is divided after floor time, may be performed after the dough is divided and is then shaped after bench time, or may be performed after final fermentation. Alternatively, the freezing may be performed after baking or after semi-baking. Also in the case of performing freezing treatment, there is no particular limitation on the time to add the cohesiveness-improving agent.

The freezing treatment may be performed by keeping bread dough at a temperature of -80°C to -10°C. The temperature may be constant, or may be changed as appropriate. If the temperature is changed, for example, settings may be adopted in which the bread dough is kept at a temperature of -30°C to -40°C for approximately 1 to 3 hours, and is then kept at -10°C to -20°C for several days to several months, but there is no limitation to this. The time of freezing treatment may be adjusted as appropriate according to the type or size of bread or according to a desired storage time.

In the case of performing freezing treatment, bread is preferably produced by performing thawing treatment thereafter. The thawing treatment may be performed by keeping bread dough, for example, at a temperature of 15°C to 30°C until it is completely thawed.

Bread may be filled with filling, or spread may be applied to the bread surface. Examples of such filling or spread include custard cream, chocolate cream, jams, bean paste, and delicatessens (curry, chow mein, tuna, eggs, potato, etc.). Examples of bread include white bread, sweet buns, rolls, French bread, steamed buns, stuffed bread, bread rolls, fruit bread, corn bread, butter-enriched rolls, buns, sandwich, croissants, Danish pastries, hardtacks, bagels, and pretzels.

The cohesiveness-improving agent may be used for other grain flour puffed food products, for example, food products such as Western-style confectionery and Japanese-style confectionery. Examples of the Western-style confectionery include cakes, pastries, pies, baumkuchens, biscuits, cookies, crackers, tarts, cream puff, doughnuts, sweet potato, and the like. Examples of the Japanese-style confectionery include Dora-yaki, Sakura-mochi, Chuka, Kintsuba, Tsuyabukusa, Chatuu, Tou-manjuu, Kuri-manjuu (chestnut jam bun), Geppei (mooncakes), Karukan, Uirou, Yubeshi, Momoyama, Kasutera (sponge cakes), doughnuts with bean paste, fried mooncakes, Monaka (bean-jam-filled wafers), Oshi-yaki (pressed and baked cakes), Maru-bolo (small round cookies), Tamago-matsuba (pine needle-shaped egg cakes), wheat cracker, Chinese cookies, sweet dumplings, Manjuu, Daifuku-mochi (rice cakes stuffed with sweetened bean jam), Kashiwa-mochi (rice cakes wrapped in an oak leaf), Imagawa-yaki (Japanese muffin filled with bean jam), Tai-yaki (fish-shaped pancake filled with bean jam), and the like. Western-style confectionery and Japanese-style confectionery may be baked confectionery, steamed confectionery, fried confectionery, or the like (also including those classified as Chinese confectionery, for example), and are confectionery obtained by puffing grain flour-based dough by heating such as baking, steaming, frying, or the like. In the case of these grain flour puffed food products, the cohesiveness-improving agent may be added, for example, before heating the production ingredients. The adding may be performed, for example, immediately before combining, kneading, or mixing the dough ingredients, during these processes, or after combining, kneading, or mixing the dough ingredients.

Hereinafter, the present invention will be described in more detail by means of examples, but the invention is not limited to the following examples.

### Examples

In test examples below, the following components were used in a form of commercially available products described below (note that the blended amount (bakery%) is a value based on each product weight):
BE *(Geobacillus stearothermophilus* derived BE, manufactured by Nagase ChemteX Corporation, trade name: Denazyme BBR LIGHT),
α-Amylase (manufactured by Nagase ChemteX Corporation, trade name: Denazyme SA-7),
Maltogenic amylase (manufactured by Novozymes, trade name: Novamyl conc.),
Glucan 1,4-α-maltotetraohydrolase (manufactured by Danisco, trade name: HPL G4),
Phospholipase (manufactured by Nagase ChemteX Corporation, trade name: Denabake RICH),
Emulsifier (glycerin monoester preparation, manufactured by Riken Vitamin Co., Ltd., trade name: Emalgee MM-100),
Trehalose (manufactured by Hayashibara Co., Ltd., trade name: Treha),
Maltose (manufactured by Hayashibara Co., Ltd., trade name: Sunmalt),
Maltotriose (manufactured by San-ei Sucrochemical Co., Ltd., trade name: Puretose P)
Linear oligosaccharide (manufactured by Mitsubishi-Kagaku Foods Corporation, trade name: Oligotose),
Powdered maltitol (manufactured by Mitsubishi Shoji Foodtech Co., Ltd., trade name: Amalty MR),
Reducing oligosaccharide (manufactured by Mitsubishi Shoji Foodtech Co., Ltd., trade name: PO-40),
Alginic acid ester (propylene glycol alginate, manufactured by Kimica Corporation, trade name: Konbusan 501), and
Eggshell calcium (manufactured by Kewpie Egg Corporation, trade name: Egg Calcium).

Hereinafter, breadmaking methods and evaluation methods used in the test examples below will be described.

### Breadmaking Method 1: 70% Sponge and dough method

70% of flour and yeast were mixed using a mixer (manufactured by Aicohsha Manufacturing Co., Ltd.: MT-20), and subjected to primary fermentation (28°C, humidity 75%, 4 hours). After the sponge dough fermentation was ended, remaining ingredients were added, and the mixture was kneaded and was allowed to rest for floor time (20 minutes). The dough was divided into portions each having a weight of 216 g, which were rounded into balls and were allowed to rest for bench time (20 minutes), after which the balls of dough were punched down and molded using a moulder (manufactured by Kotobuki Baking Machine Co., Ltd.). Three balls of dough were put in a loaf pan for 1.5 loaves, subjected to final fermentation (38°C, humidity 85%, 50 minutes), and baked in an oven for 40 minutes (upper fire 200°C, lower fire 210°C). In the case of adding an enzyme, it was added to the sponge dough.

Table 1 shows the processing flow of this method.

**[Table 1]**

| Processing | |
|---|---|
| Sponge mixing | 1^{st} speed for 2 min → 2^{nd} speed for 3 min kneading 24°C |
| Sponge fermentation | 27°C, humidity 75%, 4 hours |
| Dough mixing | 1^{st} speed for 2 min → 2^{nd} speed for 2 min → unsalted butter → 3^{rd} speed for 5 to 6 min kneading 27°C |
| Floor time | 20 min |
| Dividing | specific volume 4.4 |
| Bench time / Molding | 20 min |
| Secondary fermentation | 38°C, humidity 85% |
| Baking | upper fire: 200°C, lower fire: 210°C 40 min |

### Breadmaking Method 2: Standard straight method

Dough was kneaded at 27°C using a mixer (manufactured by Aicohsha Manufacturing Co., Ltd.: MT-20), and subjected to primary fermentation (28°C, humidity 80%, 60 minutes). After the primary fermentation was ended, the dough was divided into portions each having a weight of 216 g, which were rounded into balls and were allowed to rest for bench time (20 minutes), after which the balls of dough were punched down and molded using a moulder (manufactured by Kotobuki Baking Machine Co., Ltd.). Three balls of dough were put in a loaf pan for 1.5 loaves, subjected to secondary fermentation (38°C, humidity 80%, 55 minutes), and baked in an oven for 40 minutes (upper fire 200°C, lower fire 210°C).

Table 2 shows the processing flow of this method.

**[Table 2]**

| Processing | |
|---|---|
| Mixing | 1^{st} speed for 3 min → 2^{nd} speed for 2 min → unsalted butter → 2^{nd} speed for 3 min → 3^{rd} speed for 3 min kneading 27°C |
| Primary fermentation | 28°C, humidity 80% |
| Dividing | specific volume 4.4 |
| Bench time / Molding | 20 min |
| Secondary fermentation | 38°C, humidity 80% |
| Baking | upper fire: 200°C, lower fire: 210°C 40 min |

### Breadmaking Method 3: Straight method (overnight)

Dough was kneaded at 24°C using a mixer (manufactured by Aicohsha Manufacturing Co., Ltd.: MT-20), and subjected to primary fermentation (26°C, humidity 75%, 60 minutes). After punching, the dough was flattened and placed in a plastic bag, and cooled down overnight at 0°C. The dough was divided into portions each having a weight of 216 g, which were folded back on themselves until recovery of the flexibility. After the dough portions were rounded into balls and were allowed to rest for bench time (20 minutes), the balls of dough were punched down and molded using a moulder (manufactured by Aicohsha Manufacturing Co., Ltd.). Three balls of dough were put in a loaf pan for 1.5 loaves, subjected to secondary fermentation (32°C, humidity 75%, 90 minutes), and baked in an oven for 40 minutes (upper fire 200°C, lower fire 210°C).

Table 3 shows the processing flow of this method.

**[Table 3]**

| Processing | |
|---|---|
| Mixing | 1^{st} speed for 3 min → 2^{nd} speed for 5 min → unsalted butter →1^{st} speed for 2 min → 3^{rd} speed for 6 min → 4^{th} speed for 2 min → 3^{rd} speed for 2 min kneading 24°C |
| Primary fermentation | 26°C for 60 min punching 0°C overnight |
| Dividing / Molding | specific volume 4.4 |
| Secondary fermentation | 32°C. 90 min |
| Baking | upper fire: 200°C, lower fire: 210°C 40 min |

Note that, in mixing, the 1st, 2^{nd}, 3^{rd}, and 4^{th} speeds are respectively a low speed, a medium speed, a high speed, and a highest speed.

### Evaluation Method 1: Hardness measurement

White bread was sliced to obtain a 3-cm cube from the crumb. The crumb was compressed by 15 mm using a rheometer (manufactured by Sun Scientific Co., Ltd.) with a No. 1 (25 mm disc-type) adapter, and the stress was measured.

### Evaluation Method 2: Cohesiveness measurement

White bread was sliced to obtain a 3-cm cube from the crumb. The crumb was compressed by 21 mm twice using a rheometer (manufactured by Sun Scientific Co., Ltd.) with a No. 1 (25 mm disc-type) adapter. The area ratio of waveforms representing the compression stress (area of second compression / area of first compression) was taken as the cohesiveness.

When the cohesiveness is high, that is, when the restoring force on the compression of the crumb is low, the value of that area ratio is large, whereas, when the cohesiveness is low, that is,when the restoring force is high, the value of that area ratio is small.

### Evaluation Method 3: Sensory evaluation

Sensory evaluation was performed by getting professional panelists (eight people) to eat bread without telling them the blend, and to evaluate the bread regarding meltability, cohesiveness (stickiness reduction), and lightness. The evaluation was performed in seven levels consisting of -3 to +3.

### Test Example 1: Bread cohesiveness-improving effect of BE

White bread was baked according to the 70% sponge and dough method (Breadmaking Method 1) with the following blend (Table 4), and the cohesiveness of the white bread was measured 1 day after the baking according to Evaluation Method 2.

**[Table 4]**

| Blend (bakery%) | | | | |
|---|---|---|---|---|
| | Ingredients | Com.Ex. 1 | Ex. 1 | Ex. 2 |
| Sponge dough | Strong flour | 70 | 70 | 70 |
| | Bread yeast | 2.5 | 2.5 | 2.5 |
| | Water | 40 | 40 | 40 |
| | BE | - | 80ppm | 40ppm |
| Dough mixing | Strong flour | 30 | 30 | 30 |
| | Sugar | 6 | 6 | 6 |
| | Table salt | 2 | 2 | 2 |
| | Powdered skim milk | 2 | 2 | 2 |
| | Unsalted butter | 6 | 6 | 6 |
| | Water | 30 | 30 | 30 |

Fig. 1 is a graph showing the bread cohesiveness 1 day after the baking, of white bread to which BE was added (Example 1: 80 ppm and Example 2: 40 ppm) and white bread to which no BE was added (Comparative Example 1). The white breads to which 80 ppm and 40 ppm of BE were added (Examples 1 and 2) had a significantly decreased cohesiveness compared with that of the white bread to which no BE was added (Comparative Example 1). Thus, BE added in breadmaking reduced the cohesiveness of white bread obtained 1 day after the baking.

### Test Example 2: Research on bread cohesiveness-improving effect of BE when used in combination with α-amylase

White bread was baked according to the standard straight method (Breadmaking Method 2) with the following blend (Table 5), and the cohesiveness of the white bread was measured 1 day after the baking according to Evaluation Method 2.

**[Table 5]**

| Blend (bakery%) | | | |
|---|---|---|---|
| Ingredients | Com.Ex. 2 | Com.Ex. 3 | Ex. 3 |
| Strong flour | 100 | 100 | 100 |
| Sugar | 6 | 6 | 6 |
| Table salt | 2 | 2 | 2 |
| Powdered skim milk | 2 | 2 | 2 |
| Unsalted butter | 6 | 6 | 6 |
| Bread yeast | 2.5 | 2.5 | 2.5 |
| BE | - | - | 160ppm |
| *α*-amylase | - | 10ppm | 10ppm |
| Water | 72 | 72 | 72 |

Fig. 2 is a graph showing the cohesiveness 1 day after the baking, of white bread to which α-amylase and BE were added (Example 3), white bread to which neither of α-amylase nor BE was added (Comparative Example 2), and white bread to which only α-amylase was added (Comparative Example 3). While the white bread to which only α-amylase was added (Comparative Example 3) had an increased cohesiveness compared with that of the white bread to which neither of α-amylase nor BE was added (Comparative Example 2), the white bread to which α-amylase and BE were added (Example 3) had a decreased cohesiveness. Thus, BE added in breadmaking reduced the cohesiveness of white bread obtained 1 day after the baking, even in combination with α-amylase.

### Test Example 3: Cohesiveness-improving effect of BE when used in combination with maltogenic amylase

White bread was baked according to the standard straight method (Breadmaking Method 2) with the following blend (Table 6).

One day after the baking, the hardness of the white bread was measured according to Evaluation Method 1, and the cohesiveness of the white bread was measured according to Evaluation Method 2. Furthermore, the hardness of the white bread was measured in a similar manner 2 days and 5 days after the baking as well.

**[Table 6]**

| Blend bakery% | | | |
|---|---|---|---|
| Ingredients | Ex. 4 | Com.Ex. 4 | Ex. 5 |
| Strong flour | 100 | 100 | 100 |
| Sugar | 6 | 6 | 6 |
| Table salt | 2 | 2 | 2 |
| Powdered skim milk | 2 | 2 | 2 |
| Unsalted butter | 6 | 6 | 6 |
| Bread yeast | 2.5 | 2.5 | 2.5 |
| BE | 160ppm | - | 160ppm |
| Maltogenic amylase | - | 10ppm | 10ppm |
| Water | 72 | 72 | 72 |

Fig. 3 is a graph showing the bread cohesiveness 1 day after the baking, of white bread to which BE was added (Example 4), white bread to which only maltogenic amylase was added (Comparative Example 4), and white bread to which maltogenic amylase and BE were added (Example 5). While the white bread to which only maltogenic amylase was added (Comparative Example 4) had an increased cohesiveness, the white bread to which BE was added (Example 4) and the white bread to which maltogenic amylase and BE were added (Example 5) showed decrease in cohesiveness. Thus, BE added in breadmaking reduced the cohesiveness of white bread obtained 1 day after the baking, even in combination with maltogenic amylase.

Fig. 4 is a graph showing the white bread hardness 1 day, 2 days, and 5 days after the baking, of the white bread to which BE was added (Example 4), the white bread to which only maltogenic amylase was added (Comparative Example 4), and the white bread to which maltogenic amylase and BE were added (Example 5). Hardening of the bread over time after the baking, that is, aging of the bread was suppressed in the case of the white bread to which maltogenic amylase and BE were added (Example 5), as in the white bread to which only maltogenic amylase was added (Comparative Example 4). It is known that maltogenic amylase has effects of suppressing aging of bread and maintaining softness thereof. These effects of maltogenic amylase were sufficiently exerted, also in combination with BE.

When maltogenic amylase and BE were added in breadmaking, bread that was soft and had a low cohesiveness was obtained.

### Test Example 4: Cohesiveness-improving effect of BE when used in combination with maltotetraohydrolase

White bread was baked according to the standard straight method (Breadmaking Method 2) with the following blend (Table 7).

One day after the baking, the hardness of the white bread was measured according to Evaluation Method 1, and the cohesiveness of the white bread was measured according to Evaluation Method 2. Furthermore, the hardness of the white bread was measured in a similar manner 2 days and 5 days after the baking as well.

**[Table 7]**

| Blend (bakery%) | | | |
|---|---|---|---|
| Ingredients | Ex. 6 | Com.Ex. 5 | Ex. 7 |
| Strong flour | 100 | 100 | 100 |
| Sugar | 6 | 6 | 6 |
| Table salt | 2 | 2 | 2 |
| Powdered skim milk | 2 | 2 | 2 |
| Unsalted butter | 6 | 6 | 6 |
| Bread yeast | 3 | 3 | 3 |
| BE | 160ppm | - | 160ppm |
| Maltotetraohydrolase | - | 50ppm | 50ppm |
| Water | 72 | 72 | 72 |

Fig. 5 is a graph showing the bread cohesiveness 1 day after the baking, of white bread to which BE was added (Example 6), white bread to which only maltotetraohydrolase was added (Comparative Example 5), and white bread to which maltotetraohydrolase and BE were added (Example 7). While the white bread to which only maltotetraohydrolase, which cut a maltotetraoses composed of four linked glucoses out of starch, was added (Comparative Example 5) had an increased cohesivenes, the white bread to which BE was added (Example 6) and the white bread to which maltotetraohydrolase and BE were added (Example 7) showed decrease in cohesiveness. Thus, BE added in breadmaking reduced the cohesiveness of white bread obtained 1 day after the baking, even in combination with maltotetraohydrolase.

Fig. 6 is a graph showing the white bread hardness 1 day, 2 days, and 5 days after the baking, of the white bread to which BE was added (Example 6), the white bread to which only maltotetraohydrolase was added (Comparative Example 5), and the white bread to which maltotetraohydrolase and BE were added (Example 7). Hardening of the bread over time after the baking, that is, aging of the bread was suppressed in the case of the white bread to which maltotetraohydrolase and BE were added (Example 7), as in the white bread to which only maltotetraohydrolase was added (Comparative Example 5). It is known that maltotetraohydrolase has effects of suppressing aging of bread and maintaining softness thereof. These effects of maltotetraohydrolase were sufficiently exerted, also in combination with BE.

When maltotetraohydrolase and BE were added in breadmaking, bread that was soft and had a low cohesiveness was obtained.

### Test Example 5: Cohesiveness-improving effect of BE when used in combination with phospholipase

White bread was baked according to the straight method (overnight) (Breadmaking Method 3) with the following blend (Table 8).

One day after the baking, the hardness of the white bread was measured according to Evaluation Method 1, and the cohesiveness of the white bread was measured according to Evaluation Method 2. Furthermore, the hardness of the white bread was measured in a similar manner 2 days and 5 days after the baking as well.

**[Table 8]**

| Blend (bakery%) | | | |
|---|---|---|---|
| Ingredients | Ex. 8 | Com.Ex. 6 | Ex. 9 |
| Strong flour | 70 | 70 | 70 |
| Weak flour | 30 | 30 | 30 |
| Sugar | 10 | 10 | 10 |
| Table salt | 2 | 2 | 2 |
| Powdered skim milk | 4 | 4 | 4 |
| Unsalted butter | 50 | 50 | 50 |
| Bread yeast | 4 | 4 | 4 |
| Egg yolk | 25 | 25 | 25 |
| BE | 100ppm | - | 50ppm |
| Phospholipase | - | 1.5 | 1.5 |
| Water | 50 | 50 | 50 |

Fig. 7 is a graph showing the bread cohesiveness 1 day after the baking, of white bread to which BE was added (Example 8), white bread to which only phospholipase was added (Comparative Example 6), and white bread to which phospholipase and BE were added (Example 9). Phospholipase acts on phospholipid to cut out fatty acid, thereby producing lysophospholipid. Lysophospholipid is a compound also used in food products as an emulsifier, and stabilizes bread dough through interaction with starch, protein, and lipid. It is known that lysophospholipid forms complexes with starch, in particular during gelatinization, thereby softening bread and suppressing aging thereof. While the white bread to which only phospholipase was added (Comparative Example 6) had an increased cohesiveness, the white bread to which BE was added (Example 8) and white bread to which phospholipase and BE were added (Example 9) showed decrease in cohesiveness. Thus, BE added in breadmaking reduced the cohesiveness of white bread obtained 1 day after the baking, even in combination with phospholipase.

Fig. 8 is a graph showing the white bread hardness 1 day, 2 days, and 5 days after the baking, of the white bread to which BE was added (Example 8), the white bread to which only phospholipase was added (Comparative Example 6), and the white bread to which phospholipase and BE were added (Example 9). Hardening of the bread over time after the baking, that is, aging of the bread was suppressed in the case of the white bread to which phospholipase and BE were added (Example 9), as in the white bread to which only phospholipase was added (Comparative Example 6). It is known that phospholipase has effects of suppressing aging of bread and maintaining softness thereof. These effects of phospholipase were sufficiently exerted, also in combination with BE.

When phospholipase and BE were added in breadmaking, bread that was soft and had a low cohesiveness was obtained.

### Test Example 6: Cohesiveness-improving effect of BE when used in combination with emulsifier and trehalose

White bread was baked according to the standard straight method (Breadmaking Method 2) with the following blend (Table 9).

One day after the baking, the hardness of the white bread was measured according to Evaluation Method 1, and the cohesiveness of the white bread was measured according to Evaluation Method 2. Furthermore, the hardness of the white bread was measured in a similar manner 3 days and 5 days after the baking.

Furthermore, after the baking, the bread was sufficiently cooled down, and was then placed in a plastic bag and stored at 25°C. The bread obtained 1 day after the baking was subjected to sensory evaluation. The sensory evaluation was based on meltability, stickiness reduction (cohesiveness reduction), and "lightness" comprehensively evaluated from these characteristics.

**[Table 9]**

| Blend (bakery%) | | | | |
|---|---|---|---|---|
| Ingredients | Com.Ex. 7 | Ex. 10 | Com.Ex. 8 | Ex. 11 |
| Strong flour | 100 | 100 | 100 | 100 |
| Sugar | 6 | 6 | 4 | 4 |
| Table salt | 2 | 2 | 2 | 2 |
| Powdered skim milk | 2 | 2 | 2 | 2 |
| Unsalted butter | 6 | 6 | 6 | 6 |
| Bread yeast | 2.5 | 2.5 | 2.5 | 2.5 |
| BE | - | 160ppm | - | 160ppm |
| Emulsifier | 0.2 | 0. 2 | 0.2 | 0.2 |
| Trehalose | - | - | 4 | 4 |
| Water | 72 | 72 | 72 | 72 |

Fig. 9 is a graph showing the bread cohesiveness 1 day after the baking, of white bread to which emulsifier was added (Comparative Example 7), white bread to which emulsifier and BE were added (Example 10), white bread to which emulsifier and trehalose were added (Comparative Example 8), and white bread to which emulsifier, trehalose, and BE were added (Example 11). Thus, BE reduced the bread cohesiveness 1 day after the bakinge, also in combination with emulsifier and in combination with emulsifier and trehalos.

Fig. 10 is a graph showing the white bread hardness 1 day, 3 days, and 5 days after the baking, of the white bread to which emulsifier was added (Comparative Example 7), the white bread to which emulsifier and trehalose were added (Comparative Example 8), and the white bread to which emulsifier, trehalose, and BE were added (Example 11). Hardening of the bread over time after the baking, that is, aging of the bread was suppressed in the case of the white bread to which emulsifier, trehalose, and BE were added (Example 11), even compared with the white bread to which emulsifier and trehalose were added (Comparative Example 8). It is known that emulsifier and trehalose have effects of suppressing aging of bread and maintaining softness thereof. These effects were sufficiently exerted, also in combination with BE.

Fig. 11 is a graph showing taste scores regarding meltability, stickiness reduction, and lightness of the white bread to which emulsifier and BE were added (Example 10). The taste scores of the indices of meltability, stickiness reduction, and lightness of the white bread to which emulsifier and BE were added (Example 10) are shown in relative evaluation when the scores of the indices of the white bread to which emulsifier was added (Comparative Example 7) are taken as 0. The white bread of Example 10 was superior to the white bread of Comparative Example 7 in all indices of meltability, stickiness reduction, and lightness. There were effects of improving the white bread of Example 10 in particular in the stickiness reduction and the lightness by statistically significant differences compared with the white bread of Comparative Example 7.

Fig. 12 is a graph showing a comparison between taste scores regarding meltability and stickiness reduction of the white bread to which emulsifier and BE were added (Example 10), the white bread to which emulsifier and trehalose were added (Comparative Example 8), and the white bread to which emulsifier, trehalose, and BE were added (Example 11). The taste scores regarding meltability and stickiness reduction of the white bread are shown in relative evaluation when the scores of the indices of the white bread to which emulsifier was added (Comparative Example 7) are taken as 0. There were effects of improving the meltability and reducing the stickiness of the white bread of Examples 10 and 11 compared with those of the white bread of Comparative Examples 7 and 8.

When BE was added in breadmaking in combination with emulsifier or in combination with emulsifier and trehalose, bread that was soft, and had a low cohesiveness, a good meltability, and a reduced stickiness, and that had an excellent texture was obtained.

### Test Example 7: Cohesiveness-improving effect of BE when used in combination with oligosaccharide

It is known that oligosaccharide when added to bread has effects of suppressing aging thereof and providing a moist feel. On the other hand, it is also known that oligosaccharide increases bread cohesiveness. In this test, research was conducted on effects of using oligosaccharide and BE in combination.

White bread was baked according to the standard straight method (Breadmaking Method 2) with the following blend (Table 10).

One day after the baking, the hardness of the white bread was measured according to Evaluation Method 1, and the cohesiveness of the white bread was measured according to Evaluation Method 2. Furthermore, the hardness of the white bread was measured in a similar manner 2 days and 5 days after the baking as well. Furthermore, the bread obtained 1 day after the baking was subjected to sensory evaluation according to Evaluation Method 3.

**[Table 10]**

| Blend (bakery%) | | | | | |
|---|---|---|---|---|---|
| Ingredients | Ex. 10 | Ex. 12 | Ex. 13 | Ex. 14 | Ex. 15 |
| Strong flour | 100 | 100 | 100 | 100 | 100 |
| Sugar | 6 | 6 | 6 | 6 | 6 |
| Table salt | 2 | 2 | 2 | 2 | 2 |
| Powdered skim milk | 2 | 2 | 2 | 2 | 2 |
| Unsalted butter | 6 | 6 | 6 | 6 | 6 |
| Bread yeast | 2.5 | 2.5 | 2.5 | 2.5 | 2.5 |
| Emulsifier | 0.2 | 0.2 | 0.2 | 0.2 | 0.2 |
| BE | 160ppm | 160ppm | 160ppm | 160ppm | 160ppm |
| Trehalose | - | 4 | - | - | - |
| Maltose | - | - | 4 | - | - |
| Linear oligosaccharide | - | - | - | 4 | - |
| Maltotriose | - | - | - | - | 4 |
| Water | 72 | 72 | 72 | 72 | 72 |

Fig. 13 is a graph showing the bread cohesiveness 1 day after the baking, of the white bread to which BE was added (Example 10), white bread to which BE and trehalose were added (Example 12), white bread to which BE and maltose were added (Example 13), white bread to which BE and linear oligosaccharide were added (Example 14), and white bread to which BE and maltotriose were added (Example 15). The systems using oligosaccharides and BE in combination (Examples 12 to 15) exhibited cohesiveness approximately in the same level as or lower than that of the white bread to which BE was added (Example 10). Although increase in cohesiveness may be caused by the addition of oligosaccharide, this result shows that BE reduced the bread cohesiveness 1 day after the baking, even in combination with oligosaccharide.

Fig. 14 is a graph showing the white bread hardness 1 day, 2 days, and 5 days after the baking, of the white bread to which BE was added (Example 10), the white bread to which BE and trehalose were added (Example 12), the white bread to which BE and maltose were added (Example 13), the white bread to which BE and linear oligosaccharide were added (Example 14), and the white bread to which BE and maltotriose were added (Example 15). It is known that oligosaccharide has effects of suppressing aging of bread and maintaining softness thereof. These effects were sufficiently exerted, also in combination with BE.

When oligosaccharide and BE were added in breadmaking, the bread exhibited cohesiveness approximately in the same level as or lower than when only BE was added, and was softer than when only BE was added. Furthermore, sensory evaluation showed that the bread obtained when each of the oligosaccharides and BE were added had a moist feel as well.

### Test Example 8: Cohesiveness-improving effect of BE when used in combination with sugar alcohol

White bread was baked according to the standard straight method (Breadmaking Method 2) with the following blend (Table 11).

One day after the baking, the hardness of the white bread was measured according to Evaluation Method 1, and the cohesiveness of the white bread was measured according to Evaluation Method 2. Furthermore, the hardness of the white bread was measured in a similar manner 2 days and 5 days after the baking as well. Furthermore, the bread obtained 1 day after the baking was subjected to sensory evaluation according to Evaluation Method 3.

**[Table 11]**

| Blend (bakery%) | | | |
|---|---|---|---|
| Ingredients | Ex. 10 | Ex. 16 | Ex. 17 |
| Strong flour | 100 | 100 | 100 |
| Sugar | 6 | 6 | 6 |
| Table salt | 2 | 2 | 2 |
| Powdered skim milk | 2 | 2 | 2 |
| Unsalted butter | 6 | 6 | 6 |
| Bread yeast | 2. 5 | 2.5 | 2.5 |
| Emulsifier | 0. 2 | 0.2 | 0.2 |
| BE | 160ppm | 160ppm | 160ppm |
| Powdered maltitol | - | 4 | - |
| Reducing oligosaccharide | - | - | 5. 71 |
| Water | 72 | 72 | 70. 3 |

Fig. 15 is a graph showing the bread cohesiveness 1 day after the baking, of the white bread to which BE was added (Example 10), white bread to which BE and powdered maltitol were added (Example 16), and white bread to which BE and reducing oligosaccharide were added (Example 17). The systems using sugar alcohols and BE in combination (Examples 16 and 17) exhibited cohesiveness lower than when only BE was added. Although increase in cohesiveness may be caused by the addition of sugar alcohol, this result shows that BE reduced the bread cohesiveness 1 day after the baking, even in combination with sugar alcohol.

Fig. 16 is a graph showing the white bread hardness 1 day, 2 days, and 5 days after the baking, of the white bread to which BE was added (Example 10), the white bread to which BE and powdered maltitol were added (Example 16), and the white bread to which BE and oligosaccharide reduced products were added (Example 17). It is known that sugar alcohol has effects of suppressing aging of bread and maintaining softness thereof. These effects were sufficiently exerted, also in combination with BE.

When sugar alcohol (in particular, oligosaccharide reduced products) and BE were added in breadmaking, the bread exhibited cohesiveness approximately in the same level as or lower than when only BE was added, and was softer than when only BE was added. Furthermore, sensory evaluation showed that the bread obtained when sugar alcohol (in particular, oligosaccharide reduced products) and BE were added had a moist feel as well.

### Test Example 9: Comparison between cohesiveness-improving effects of BE, and alginic acid ester and eggshell calcium

It is known that alginic acid ester and eggshell calcium have effects of preventing caving (cave-in) of bread. In this test, research was conducted on the cohesiveness-improving effect of BE in comparison with that of alginic acid ester and eggshell calcium.

White bread was baked according to the standard straight method (Breadmaking Method 2) with the following blend (Table 12).

One day after the baking, the hardness of the white bread was measured according to Evaluation Method 1, and the cohesiveness of the white bread was measured according to Evaluation Method 2. Furthermore, the hardness of the white bread was measured in a similar manner 2 days and 5 days after the baking as well. Furthermore, the bread obtained 1 day after the baking was subjected to sensory evaluation according to Evaluation Method 3.

**[Table 12]**

| Blend (bakery%) | | | | |
|---|---|---|---|---|
| Ingredients | Com.Ex. 9 | Ex. 10 | Com.Ex. 10 | Com.Ex. 11 |
| Strong flour | 100 | 100 | 100 | 100 |
| Sugar | 6 | 6 | 6 | 6 |
| Table salt | 2 | 2 | 2 | 2 |
| Powdered skim milk | 2 | 2 | 2 | 2 |
| Unsalted butter | 6 | 6 | 6 | 6 |
| Bread yeast | 2. 5 | 2.5 | 2. 5 | 2.5 |
| Emulsifier | 0. 2 | 0. 2 | 0. 2 | 0.2 |
| BE | - | 160ppm | - | - |
| Alginic acid ester | - | - | 0.2 | - |
| Eggshell calcium | - | - | - | 0.6 |
| Water | 72 | 72 | 77 | 74 |

Fig. 17 is a graph showing the bread cohesiveness 1 day after the baking, of the white bread to which BE was added (Example 10), white bread to which no BE was added (Comparative Example 9), white bread to which alginic acid ester was added (Comparative Example 10), and white bread to which eggshell calcium was added (Comparative Example 11). The white bread to which alginic acid ester was added (Comparative Example 10) and the white bread to which eggshell calcium was added (Comparative Example 11) exhibited cohesiveness reduction approximately in the same level as that in the white bread to which BE was added (Example 10).

Fig. 18 is a graph showing the white bread hardness 1 day, 2 days, and 5 days after the baking, of the white bread to which BE was added (Example 10), the white bread to which no BE was added (Comparative Example 9), the white bread to which alginic acid ester was added (Comparative Example 10), and the white bread to which eggshell calcium was added (Comparative Example 11). While the bread hardness of the white bread to which eggshell calcium was added (Comparative Example 11) significantly increased over time after the baking, the hardness of the white bread to which alginic acid ester was added (Comparative Example 10) was approximately the same level as that of the white bread to which BE was added (Example 10).

Sensory evaluation showed that the white bread to which alginic acid ester was added (Comparative Example 10) had a texture that was very firm and rough, and did not exhibit good meltability or lightness as shown in the white bread to which BE was added (Example 10).

It is clearly seen from the above-described results that BE is excellent as a cohesiveness-improving agent which reduces cohesiveness while maintaining palatability, and suppress caving of bread, compared with alginic acid ester and eggshell calcium agents conventionally used as caving (cave-in)-preventing agents.

### Industrial Applicability

It is possible to reduce the cohesiveness of bread and other grain flour puffed food products, thereby improving the cohesiveness of such food products. For example, according to the present invention, it is possible to obtain bread and other grain flour puffed food products with a reduced stickiness in the oral cavity. It is possible to obtain bread and other grain flour puffed food products with an improved meltability. The bread and other grain flour puffed food products to which BE was added do not absorb so much saliva and have improved swallowability so as to be easily swallowed, and can have a light texture. The bread and other grain flour puffed food products can have an improved texture so as to be easily eaten by those having poor or hard masticating and swallowing abilities such as elderly people or infants. Furthermore, when using other components such as α-amylase, maltogenic amylase, glucan 1,4-α-maltotriohydrolase, glucan 1,4-α-maltotetraohydrolase, glucan 1,4-α-maltohexaosidase, phospholipase, galactolipase, emulsifier, oligosaccharide, and sugar alcohol in combination with BE, it is possible to improve the cohesiveness of bread and other grain flour puffed food products, without impairing improvements of the qualities of food products by such other components. Furthermore, the cohesiveness-improving agent can be a comprehensively more excellent cohesiveness-improving agent, as a cohesiveness-improving agent which suppress caving of bread and other grain flour puffed food products while maintaining palatability due to an excellent restoring force of BE contained as an active component, than conventional caving-preventing agents such as alginic acid ester or eggshell calcium.

## Claims

1. Use of branching enzyme EC 2.4.1.18 to improve cohesiveness in bread, cohesiveness being measured by compressing a 3-cm crumb by 21 mm twice using a rheometer with a 25 mm disc-type adapter, and taking the area ratio of waveforms representing the compression stress, area of second compression / area of first compression, as the cohesiveness.

2. The use of claim 1, wherein the branching enzyme is in combination with at least one selected from the group consisting of α-amylase, maltogenic amylase, glucan 1,4-α-maltotriohydrolase, glucan 1,4-α-maltotetraohydrolase, phospholipase, galactolipase, emulsifier, oligosaccharide, and sugar alcohol.

## Patentansprüche

1. Verwendung des Verzweigungsenzyms EC 2.4.1.18 zum Verbessern der Bindekraft in Brot, wobei die Bindekraft durch zweimaliges Komprimieren einer 3-cm-Krume um 21 mm unter Verwendung eines Rheometers mit einem scheibenartigen 25-mm-Adapter gemessen wird und das Flächenverhältnis der Fläche der zweiten Kompression/Fläche der ersten Kompression der Wellenformen, die die Druckfestigkeit darstellen, als die Bindekraft genutzt wird.

2. Verwendung nach Anspruch 1, wobei das Verzweigungsenzym in Kombination mit zumindest einem ist, ausgewählt aus der Gruppe bestehend aus α-Amylase, maltogener Amylase, Glucan 1,4-α-Maltotriohydrolase, Glucan 1,4-α-Maltotetraohydrolase, Phospholipase, Galaktolipase, Emulgator, Oligosaccharid und Zuckeralkohol.

## Revendications

1. Utilisation d'une enzyme de ramification EC 2.4.1.18 pour améliorer la cohésion dans le pain, la cohésion étant mesurée en comprimant une mie de 3 cm de 21 mm deux fois à l'aide d'un rhéomètre doté d'un adaptateur de type disque de 25 mm, et en prenant le rapport de surface des longueurs d'onde représentant la contrainte de compression, surface de la seconde compression surface de la première compression, en tant que cohésion.

2. Utilisation selon la revendication 1, ladite enzyme de ramification étant en combinaison avec au moins un composé choisi dans le groupe constitué par l'a-amylase, l'amylase maltogène, la glucane 1,4-α-maltotriohydrolase, la glucane 1,4-α-maltotétraohydrolase, la phospholipase, la galactolipase, un émulsifiant, un oligosaccharide et un alcool de sucre.
